# EUROPEAN PATENT APPLICATION

(11) **EP 4 796 312 A1**
(43) Date of publication of application: **26.08.2026**
(21) Application number: 24879524.7
(22) Date of filing: 26.09.2024
(51) Int. Cl.: B32B 5/02, B29C 70/10, B29C 70/30, B32B 3/20

(54) **PANEL MEMBER**

(30) Priority: 16.10.2023 JP 2023178045
(71) Applicant: ShinMaywa Industries, Ltd., Takarazuka-shi, Hyogo 665-8550 (JP)
(72) Inventor: FUKUDA Teppei, Takarazuka-shi, Hyogo 665-8550 (JP); IOHARA Kenji, Takarazuka-shi, Hyogo 665-8550 (JP); KAMACHI Tomohiro, Takarazuka-shi, Hyogo 665-8550 (JP); TOYOSAWA Takafumi, Takarazuka-shi, Hyogo 665-8550 (JP); NAKAKURA Takuya, Takarazuka-shi, Hyogo 665-8550 (JP); KAWASE Yasuhiro, Takarazuka-shi, Hyogo 665-8550 (JP); KANDA Naoki, Takarazuka-shi, Hyogo 665-8550 (JP); NISHIMURA Taiichi, Takarazuka-shi, Hyogo 665-8550 (JP); SUZUKI Tsuyoshi, Takarazuka-shi, Hyogo 665-8550 (JP); TERAYAMA Ryota, Takarazuka-shi, Hyogo 665-8550 (JP)
(74) Representative: Grünecker Patent- und Rechtsanwälte PartG mbB
(86) International application number: PCT/JP2024/034385
(87) International publication number: WO 2025/084098

(57) **Abstract**

It is an object to provide a versatile panel member that is capable of achieving weight reduction and improved mechanical strength, and that can be used in various applications. A panel member (100) includes a sheet-like first skin member (1) and a sheet-like second skin member (2) including thermoplastic resin, and a middle member (3) including continuous fibers and arranged between the first skin member (1) and the second skin member (2). The middle member (3) includes a middle forming member (M1, M2, M3). The middle forming member (M1, M2, M3) includes a first portion (M11, M23, M33) that is connected to the first skin member (1), a second portion (M13, M21, M31, M35) that is connected to the second skin member (2), and a third portion (M12, M22, M24, M32, M34) that connects together the first portion (M11, M23, M33) and the second portion (M13, M21, M31, M35).

## Description

### Technical Field

The present invention relates to a panel member having skin members including thermoplastic resin and a middle member including continuous fibers.

### Background Art

Panel members have been known in the art that include a low-density middle member such as a honeycomb, polymer foam, or corrugated material, sandwiched between sheet-like skin members. Such panel members have excellent properties in terms of strength and rigidity. Therefore, these panel members are used in various fields and applications, such as components for aircraft fuselages.

Panel members with a corrugated middle member have excellent bending strength compared to those with a honeycomb middle member. When such panel members include thermoplastic resin capable of secondary forming by applying heat, they are advantageous in adopting shapes suited to the application. In recent years, such panel members have been known in which the arrangement of continuous fibers is devised in an attempt to improve mechanical strength (see, for example, Patent Literature 1).

### Citation List

### Patent Literature

Patent Literature 1: JP 2019-130695 A

### Summary of Invention

### Technical Problem

For such panel members having skin members including thermoplastic resin and a middle member including continuous fibers, there has been an expectation to expand the range of applications (i.e., to improve the versatility) by simultaneously achieving weight reduction and improved mechanical strength. In view of this, the present inventors made in-depth research to take notice of a configuration that is capable of simultaneously achieving these two goals.

A panel member can be used in a wider range of applications if weight reduction and improved mechanical strength can be more expected. However, achieving both weight reduction and improved mechanical strength is not always easy. For example, reducing the area occupied by the middle member in the panel member can achieve weight reduction. This, however, tends to lead to a decrease in the strength of the panel member. For example, depending on the application of the panel member, loads may not be uniformly applied thereon, resulting in the required strength varying between different portions. Moreover, when the panel member is not arranged on a flat surface or when the panel member itself does not have a flat shape, loads may not be applied evenly across all portions of the panel member. In consideration of various environments in which the panel member may be used, mechanical strength may possibly be locally insufficient. On the other hand, increasing the strength by uniformly increasing the thickness in an attempt to compensate for such insufficiency can hinder weight reduction. Therefore, panel members simply having a uniform shape or a homogeneous configuration still leave room for improvement in various aspects of practical use.

The present invention has been made in view of these problems, and it is an object thereof to provide a versatile panel member that is capable of achieving weight reduction and improved mechanical strength, and that can be used in various applications.

### Solution to Problem

A panel member disclosed herein includes: a sheet-like first skin member and a sheet-like second skin member including thermoplastic resin; and a middle member including continuous fibers and arranged between the first skin member and the second skin member. The first skin member includes a plurality of first connected portions that are connected to the middle member, and a plurality of first non-connected portions that are not connected to the middle member. The second skin member includes a plurality of second connected portions that are connected to the middle member, and a plurality of second non-connected portions that are not connected to the middle member. The first connected portion and the first non-connected portion are arranged alternating in a first direction. The second connected portion and the second non-connected portion are arranged alternating in the first direction. The middle member includes a plurality of middle forming members. The plurality of middle forming members each include a first portion that is connected to at least some of the first connected portions of the first skin member, a second portion that is connected to at least some of the second connected portions of the second skin member, and a third portion that connects together the first portion and the second portion and that is not connected to the first connected portions and the second connected portions.

With the panel member described above, it is possible to obtain lightweight properties and sufficient compressive strength by having a sandwich structure with a corrugated middle member. Moreover, since the middle member includes a plurality of middle forming members, it is possible to obtain a configuration suited to the applicable product by appropriately selecting the middle forming members. Therefore, the versatility is high. For example, when the panel member described above is used as a composite curvature surface member (a member having a curved surface having a plurality of curvatures), the middle forming members can be arranged in locations and attitudes such as to conform to the overall shape of the composite curvature surface member, thereby obtaining the desired strength. Therefore, it can be effectively applied to products of various shapes while having the expected lightweight properties and compressive strength.

At least one of the plurality of middle forming members may include a first middle forming portion formed by laminating a first number of layers of the continuous fibers, and a second middle forming portion formed by laminating a second number of layers of the continuous fibers, and the first number may be greater than the second number. With such a panel member, since the first number is greater than the second number, the first middle forming portion has higher strength than the second middle forming portion. For portions where high strength is locally required, it is possible to increase the strength without adding weight to other portions. Note that at least one of the middle forming members may include three or more portions with different numbers of layers of continuous fibers.

The first connected portion, the first non-connected portion, the second connected portion, and the second non-connected portion may extend in a second direction different from the first direction. The first middle forming portion and the second middle forming portion may be arranged in the first direction or in the second direction.

The first skin member and/or the second skin member may include a first skin forming portion formed by laminating a third number of layers of continuous fibers, and a second skin forming portion formed by laminating a fourth number of layers of the continuous fibers, and the third number may be greater than the fourth number. Therefore, for the first skin member and/or the second skin member, it is possible to increase the strength of a portion where high strength is locally required to be higher than the strength of other portions. Note that the first skin member and/or the second skin member may include three or more portions with different numbers of layers of continuous fibers.

The first connected portion, the first non-connected portion, the second connected portion, and the second non-connected portion may extend in a second direction different from the first direction. The first skin forming portion and the second skin forming portion may be arranged in the first direction or in the second direction.

Thus, by varying the number of layers along different directions, it is possible to realize a panel member that has the required strength for each different portion in accordance with the shape and application of the product. For example, unlike panel members that have uniform thickness and strength, it is possible to obtain sufficient strength in portions that require strength by increasing the number of layers of continuous fibers, while achieving the effect of reducing weight by decreasing the number of layers of continuous fibers for portions where the number of layers can be fewer. It is possible to realize a panel member that flexibly have the strength suitable for practical use while also achieving weight reduction.

The first connected portion, the first non-connected portion, the second connected portion, and the second non-connected portion may extend in a second direction different from the first direction. The panel member may include a cover member that is attached to an end portion, in the second direction or in a direction opposite to the second direction, of the first skin member, the second skin member, and the middle member, wherein the cover member covers an area defined by the first skin member, the second skin member, and the middle member. The cover member may include a plurality of fixed surface portions that are fixed to at least two of the first skin member, the second skin member, and the middle member. Thus, as the cover member includes the plurality of fixed surface portions, it is possible to effectively suppress delamination of the middle member, etc. As a result, it is possible to maintain the quality of the panel member over a long period of time.

At least one of the middle forming members may have a hat-shaped cross-sectional shape. At least one of the middle forming members may have a generally Z-shaped, generally C-shaped or generally U-shaped cross-sectional shape.

At least one of the first skin member and the second skin member may be a composite curvature surface member. It is possible to arrange the plurality of middle forming members so as to conform to the shape of the first skin member and/or the second skin member that is a composite curvature surface member.

### Advantageous Effects of Invention

According to the present invention, it is possible to provide a versatile panel member that is capable of achieving weight reduction and improved mechanical strength, and that can be used in various applications.

### Brief Description of Drawings

[Fig. 1] Fig. 1(a) is a perspective view of a panel member according to the first embodiment, and Fig. 1(b) is a cross-sectional view of the panel member as seen in X1-X1 direction of Fig. 1(a).
[Fig. 2] Fig. 2 is an exploded cross-sectional view of the panel member according to the first embodiment.
[Fig. 3] Fig. 3 is a perspective view showing the longitudinal direction of the continuous fibers in the outermost layer in some members of the panel member according to the first embodiment.
[Fig. 4] Fig. 4 is a schematic plan view showing divided portions of the panel member according to the first embodiment.
[Fig. 5] Fig. 5 is a cross-sectional view of a different example of the panel member according to the first embodiment.
[Fig. 6] Fig. 6(a) is a schematic diagram showing the arrangement of the panel member according to the second embodiment, Fig. 6(b) is a rear view of the same panel member, Fig. 6(c) is a cross-sectional view taken along line P1-P1 of Fig. 6(b), and Fig. 6(d) is a cross-sectional view taken along line P2-P2 of Fig. 6(b).
[Fig. 7] Fig. 7(a) is a perspective view of the panel member according to the third embodiment, Fig. 7(b) is a side view of the same panel member, Fig. 7(c) is a cross-sectional view taken along line P3-P3 of Fig. 7(b), and Fig. 7(d) is a cross-sectional view taken along line P4-P4 of Fig. 7(b).

### Description of Embodiments

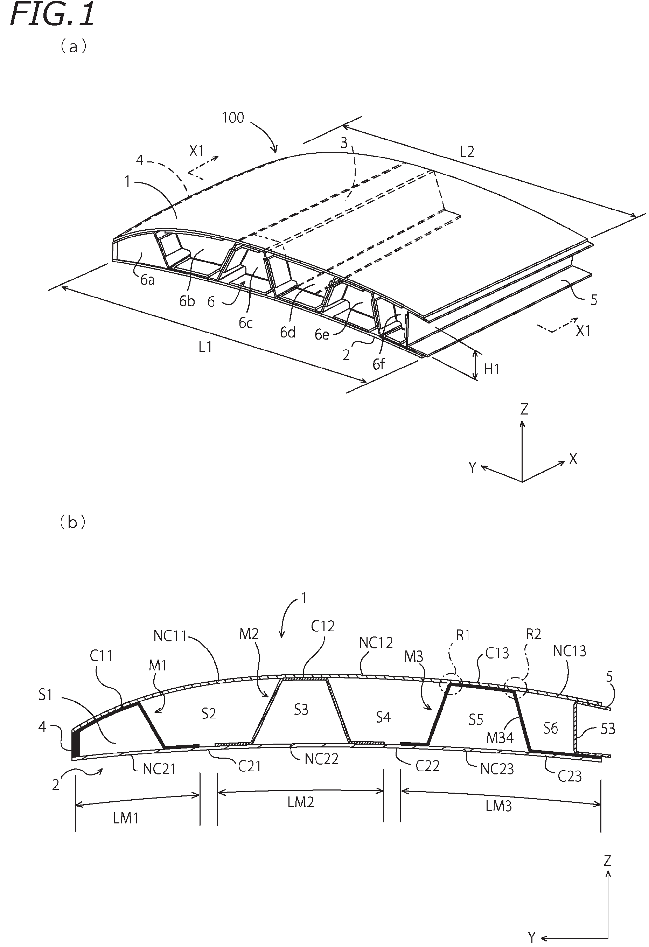

An embodiment of the panel member will now be described with reference to the drawings. Fig. 1(a) is a schematic perspective view of a panel member 100 according to the first embodiment. The panel member 100 according to the present embodiment forms a part of a wing of an aircraft. X, Y, and Z in the drawings represent three directions that are mutually orthogonal. In the following description, the Y direction may be referred to as rearward, and the direction opposite to the Y direction as forward. The Z direction may be referred to as upward, and the direction opposite to the Z direction as downward.

The panel member 100 includes a first skin member 1, a second skin member 2, and a middle member 3 arranged between the first skin member 1 and the second skin member 2. The first skin member 1 and the second skin member 2 are sheet-like members including thermoplastic resin. The first skin member 1 and the second skin member 2 are spaced apart from each other in the Z direction. The middle member 3 includes continuous fibers.

The length L1 of the end portion of the panel member 100 in the direction opposite to the X direction is greater than the length L2 of the end portion in the X direction. Note that the lengths L1 and L2 as used herein refer to lengths in the Y direction. The first skin member 1 and the second skin member 2 have primary surfaces extending in the X direction and the Y direction. The primary surfaces of the first skin member 1 and the second skin member 2 are curved and have a plurality of curvatures. The curvatures of the primary surfaces of the first skin member 1 and the second skin member 2 vary between different portions. The panel member 100 is a composite curvature surface member, in which the upper primary surface (the first skin member 1) and the lower primary surface (the second skin member 2) have curvature anisotropy.

As shown in Fig. 1(b), the middle member 3 has a corrugated shape that conforms to the composite curvature surfaces of the first skin member 1 and the second skin member 2. The middle member 3 extends in the X direction. The first skin member 1, the second skin member 2, and the middle member 3 form a sandwich structure with the middle member 3 being the core member. The first skin member 1, the second skin member 2, and the middle member 3 have a structure with high durability against stress changes occurring on the primary surfaces of the first skin member 1 and the second skin member 2.

The interval between the first skin member 1 and the second skin member 2 gradually decreases in the forward direction and gradually decreases in the rearward direction. A solid (e.g., solid rod-shaped) rear edge member 4 is provided at the rear end portion of the panel member 100. A spar member 5 is provided at the front end portion of the panel member 100. The rear edge member 4 and the spar member 5 extend in the X direction. Note that in the present specification, extending in the X direction, the Y direction, or the Z direction includes not only extending in a direction strictly aligned with the X direction, the Y direction, or the Z direction, but also extending in a direction slightly inclined from those directions. The spar member 5 is formed to have a generally C-shaped cross section. These members 1, 2, 3, 4, and 5 are welded together at their contact points.

As shown in Fig. 1(a), a plurality of cover members 6 are provided at the end portion of the panel member 100 in the direction opposite to the X direction. The cover members 6 support the first skin member 1, the second skin member 2, the middle member 3, the rear edge member 4, and the spar member 5. The cover members 6 divide the panel member 100 into the inner area and the outer area. The rearmost cover member 6 is a filler member 6a that covers the area S1 (see Fig. 1(b)) enclosed by the rear edge member 4, the middle member 3, and the second skin member 2. This filler member 6a, like the other cover members 6, has a supporting function in the panel member 100.

As shown in Fig. 1(b), the first skin member 1 is used as the upper skin member of the panel member 100. The first skin member 1 is a carbon fiber-reinforced composite material including carbon fibers (e.g., PAN-based carbon fibers) in thermoplastic resin (e.g., polyphenylene sulfide or ketone-based resin). Similarly, the second skin member 2 is a carbon fiber-reinforced composite material including carbon fibers in thermoplastic resin. The middle member 3 has a corrugated configuration in which a plurality of protrusions/depressions arranged in the Y direction. Similar to the first skin member 1 and the second skin member 2, the middle member 3 is a carbon fiber-reinforced composite material including carbon fibers in thermoplastic resin. Since the panel member 100 according to the present embodiment is formed by the composite material described above, the panel member 100 is light in weight and provides excellent strength and rigidity. Moreover, the panel member 100 also has excellent flame retardancy due to the inclusion of carbon fibers.

The first skin member 1 includes connected portions C11, C12, C13 that are connected to the middle member 3 and non-connected portions NC11, NC12, NC13 that are not connected to the middle member 3. The middle member 3 is fixed by being welded to the connected portions C11, C12, C13. The non-connected portions NC11, NC12, NC13 are spaced apart from the middle member 3. The connected portions C11, C12, C13 and the non-connected portions NC11, NC12, NC13 are arranged alternating and contiguous with each other along the curved primary surface of the first skin member 1. The connected portions C11, C12, C13 and the non-connected portions NC11, NC12, NC13 are arranged in the Y direction. The connected portions C11, C12, C13 and the non-connected portions NC11, NC12, NC13 both extend in the X direction (see Fig. 1(a)). The thickness of the first skin member 1 is not uniform but varies partially in each of the direction of arrangement (Y direction) and the direction of extension (X direction). While there is no particular limitation, the thickness of the first skin member 1 is about 0.4 mm to 2.2 mm.

The second skin member 2 includes non-connected portions NC21, NC22, NC23 that are not connected to the middle member 3, and connected portions C21, C22, C23 that are connected to the middle member 3. The middle member 3 is fixed by being welded to the connected portions C21, C22, C23. The non-connected portions NC21, NC22, NC23 are spaced apart from the middle member 3. The connected portions C21, C22, C23 and the non-connected portions NC21, NC22, NC23 are arranged alternating and contiguous with each other along the curved primary surface of the second skin member 2. The connected portions C21, C22, C23 and the non-connected portions NC21, NC22, NC23 are arranged in the Y direction. The connected portions C21, C22, C23 and the non-connected portions NC21, NC22, NC23 both extend in the X direction. The thickness of the second skin member 2 is not uniform but varies partially in each of the direction of arrangement and the direction of extension. While there is no particular limitation, the thickness of the second skin member 2 is about 0.4 mm to 2.2 mm.

The middle member 3 includes a plurality of separate members (hereinafter referred to as middle forming members). In the present embodiment, the middle member 3 has three middle forming members M1, M2, M3. The middle forming members M1, M2, M3 are separately formed members and have shapes different from each other. As shown in Fig. 1(b), the middle forming members M1, M2, M3 have lengths LM1, LM2, LM3, respectively, along the primary surface of the second skin member 2. The middle forming members M1, M2, M3 each have a portion in contact with the first skin member 1 and a portion in contact with the second skin member 2. For example, the rearmost middle forming member M1 includes a portion (the first skin contact surface portion) M1a that is in contact with the connected portion C11 of the first skin member 1, a portion (the second skin contact surface portion) M1c that is in contact with the connected portion C21 of the second skin member 2, and a portion (the inclined surface portion) M1b that connects together these two portions M1a, M1c and is not connected to the connected portions C11 and C21. The portion M1b is inclined from the Y direction and the Z direction.

As shown in Fig. 1(b), the area enclosed by the first skin member 1, the second skin member 2, the rear edge member 4, and the spar member 5 is divided into six areas S1, S2, S3, S4, S5, S6 by three middle forming members M1, M2, M3. The cover member 6 (see Fig. 1(a)) includes a first cover member 6a, a second cover member 6b, a third cover member 6c, a fourth cover member 6d, a fifth cover member 6e, and a sixth cover member 6f, which cover these areas S1 to S6, respectively. The sixth cover member 6f is provided in the foremost area S6. The sixth cover member 6f includes an upright portion whose primary surface is in the YZ plane, and four fixed surface portions that are formed by bending the upright portion toward the near side (opposite to the X direction) of Fig. 1(b). The upright portion has a shape that is generally equal to the shape of the area S6 illustrated in Fig. 1 (b). The four fixed surface portions are facing, and in contact with, the non-connected portion NC13 of the first skin member 1, the inclined surface portion M34 of the middle forming member M3, the connected portion C23 of the second skin member 2, and an upright portion 53 of the spar member 5, respectively. These four fixed surface portions are fixed to their respectively opposing portions by welding or via fasteners. The sixth cover member 6f covers the area S6 by being thus fixed to a plurality of different portions. By providing the six cover members (the first to sixth cover members 6a to 6f) for the six areas S1 to S6, it is possible to suppress delamination of the components (the first skin member 1, the second skin member 2, and the middle member 3) of the panel member 100. Note that with the panel member 100 according to the present embodiment, as described above, the filler member 6a is used as the first cover member. However, depending on the size and shape of the areas, the first cover member 6a may have a similar configuration to at least one of the other cover members 6b to 6f.

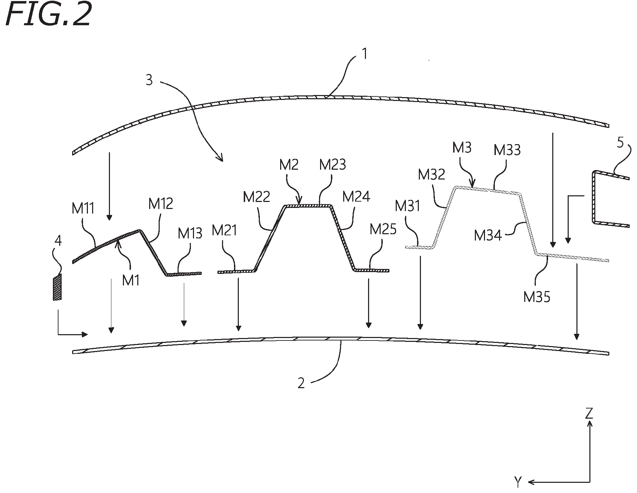

The panel member 100 according to the present embodiment includes a composite curvature surface member, as described above, and the lengths L1, L2 of the end portions in the X direction and the opposite direction thereof are different from each other. Therefore, the strength, etc., required of the panel member 100 vary between different portions. In the present embodiment, the middle forming members M1 to M3 are provided, as shown in the schematic cross-sectional view of Fig. 2, so as to conform to the shape, etc., of the panel member 100.

As described above, the first middle forming member M1 includes a first upper surface portion M11 in contact with the connected portion C11, a first lower surface portion M13 in contact with the connected portion C21, and a first inclined surface portion M12 that links together the first upper surface portion M11 and the first lower surface portion M13. The first middle forming member M1 has a generally Z-shaped cross-sectional shape. The first upper surface portion M11 is welded to the first skin member 1, and the first lower surface portion M13 is welded to the second skin member 2. The rear end portions of the first skin member 1, the second skin member 2, and the first middle forming member M1 are welded to the rear edge member 4.

The second middle forming member M2 includes a second rearward lower surface portion M21 in contact with the connected portion C21, a second upper surface portion M23 in contact with the connected portion C12, a second forward lower surface portion M25 in contact with the connected portion C22, a second rearward inclined surface portion M22 that links together the second rearward lower surface portion M21 and the second upper surface portion M23, and a second forward inclined surface portion M24 that links together the second upper surface portion M23 and the second forward lower surface portion M25. In the present embodiment, the second rearward lower surface portion M21 is spaced apart from the first lower surface portion M13, forming a gap between the second rearward lower surface portion M21 and the first lower surface portion M13. The second middle forming member M2 has a hat-shaped cross-sectional shape. The second rearward lower surface portion M21 and the second forward lower surface portion M25 are welded to the second skin member 2, and the second upper surface portion M23 is welded to the first skin member 1.

The third middle forming member M3 includes a third rearward lower surface portion M31 in contact with the connected portion C22, a third upper surface portion M33 in contact with the connected portion C13, a third forward lower surface portion M35 in contact with the connected portion C23, a third rearward inclined surface portion M32 that links together the third rearward lower surface portion M31 and the third upper surface portion M33, and a third forward inclined surface portion M34 that links together the third upper surface portion M33 and the third forward lower surface portion M35. In the present embodiment, the third rearward lower surface portion M31 is spaced apart from the second forward lower surface portion M25, forming a gap between the third rearward lower surface portion M31 and the second forward lower surface portion M25. The third middle forming member M3 has a hat-shaped cross-sectional shape. The third rearward lower surface portion M31 and the third forward lower surface portion M35 are welded to the second skin member 2, and the third upper surface portion M33 is welded to the first skin member 1. Note that the spar member 5 is interposed between the third forward lower surface portion M35 and the first skin member 1. The first skin member 1, the second skin member 2, and the third middle forming member M3 are supported by the spar member 5.

With the panel member 100 having a composite curvature surface member as in the present embodiment, the middle member 3 includes portions (i.e., the upper surface portion and the lower surface portion) that are in contact with the first skin member 1 and the second skin member 2, and also includes a bridging portion (i.e., the inclined surface portion) that links together these portions. Thus, the panel member 100 can have the desired strength against compressive loads. Moreover, by combining a plurality of middle forming members M1, M2, M3, the panel member 100 can be formed into a desired shape while obtaining strength such as to conform to the overall shape thereof. In the present embodiment, while the middle forming member M1 has a generally Z-shaped cross-sectional shape and the middle forming members M2, M3 have a hat-shaped cross-sectional shape, the combination of the cross-sectional shapes of the middle forming members M1 to M3 can be appropriately modified, and these members may be formed uniformly in one of the shapes. Needless to say, the middle forming members M1 to M3 may have other cross-sectional shapes (e.g., a generally C-shaped or generally U-shaped cross-sectional shape), as long as similar effects are achieved. The number of middle forming members can be appropriately modified according to the overall shape of the panel member 100. For example, the configuration is not limited to a configuration in which a plurality of middle forming members with a hat-shaped cross-sectional shape are spaced apart from each other, but may be a configuration in which a plurality of middle forming members are arranged contiguously with no gap therebetween according to the overall shape of the panel member 100.

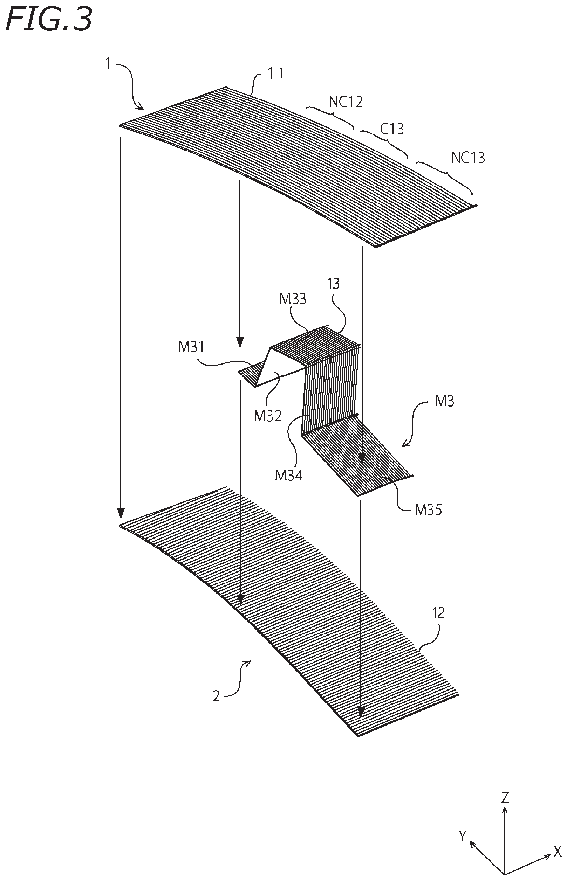

Next, the orientation of the carbon fibers (continuous fibers) in the panel member 100 will be described using Fig. 3. In the description below, the third middle forming member M3 is used as a representative example. Fig. 3 is an exploded perspective view of the first skin member 1, the third middle forming member M3, and the second skin member 2.

The first skin member 1 includes a plurality of layers laminated in the Z direction. Each layer of the first skin member 1 includes carbon fibers 11. As shown in Fig. 3, the uppermost layer of the first skin member 1 includes a plurality of carbon fibers 11 extending in the Y direction. The curvature of the first skin member 1 varies between different portions. The number of layers of the first skin member 1 varies between different portions so that the first skin member 1 has a desired shape that conforms to the overall shape of the panel member 100. For example, for the extent shown in Fig. 3, the portion to be the non-connected portion NC13 (see Fig. 1(b)) has twelve layers. In the plurality of laminated layers, the carbon fibers 11 are oriented in a pattern such as 45 degrees, 0 degrees, -45 degrees, 90 degrees, 90 degrees, -45 degrees, 0 degrees, 45 degrees. The first skin member 1 includes a plurality of layers arranged in quasi-isotropic lamination. The portion to be the connected portion C13 includes six layers. Also for these six layers, the carbon fibers 11 are appropriately oriented so as to achieve quasi-isotropic lamination. The portion to be the non-connected portion NC12 includes nine layers. Also for these nine layers, the carbon fibers 11 are oriented so as to achieve quasi-isotropic lamination. The longitudinal direction of the carbon fibers 11 in the uppermost layer of the first skin member 1 is 45 degrees. While the content of the carbon fibers 11 in the first skin member 1 is 60 mass% in the present embodiment, it can be appropriately changed to between 40 mass% and 70 mass%, with 55 mass% to 70 mass% being particularly preferred. Note that combinations of angles other than that described above are also acceptable for the orientation of the carbon fibers 11 in a plurality of layers. Even when using the combination of angles described above, the order of layering may differ from that described above.

The second skin member 2 includes a plurality of layers laminated in the Z direction. Each layer of the second skin member 2 includes carbon fibers 12. Similar to the first skin member 1, the number of layers in the second skin member 2 varies between different portions. For example, for the extent shown in Fig. 3, the portion to be the connected portion C23 includes eight layers. In these layers, the carbon fibers 12 are oriented at 45 degrees, 0 degrees, -45 degrees, 90 degrees, 90 degrees, -45 degrees, 0 degrees, and 45 degrees. The second skin member 2 includes a plurality of layers arranged in quasi-isotropic lamination. The portion to be the non-connected portion NC23 includes twelve layers. Also for these layers, the carbon fibers 12 are oriented so as to achieve quasi-isotropic lamination. The portion to be the connected portion C22 includes four layers, and the carbon fibers 12 are similarly oriented in these layers. The longitudinal direction of the carbon fibers 12 in the lowermost layer of the second skin member 2 is at 45 degrees. While the content of the carbon fibers 12 in the second skin member 2 is 60 mass%, it can be appropriately changed to between 40 mass% and 70 mass%, with 55 mass% to 70 mass% being particularly preferred. Note that combinations of angles other than that described above are also acceptable for the orientation of the carbon fibers 12 in a plurality of layers. Even when using the combination of angles described above, the order of layering may differ from that described above.

The uppermost layer of the middle member 3 includes a plurality of carbon fibers 13 extending in the Y direction. Similar to the first skin member 1 and the second skin member 2, the number of layers in the middle member 3 varies between different portions. For example, for the extent shown in Fig. 3, the third rearward lower surface portion M31 of the third middle forming member M3 includes four layers, the third rearward inclined surface portion M32 includes eight layers, the third upper surface portion M33 includes four layers, the third forward inclined surface portion M34 includes eight layers, and the third forward lower surface portion M35 includes four layers. For each of the surface portions M31 to M35, the longitudinal direction of the carbon fibers 13 in the uppermost layer is at 45 degrees. For each of the surface portions M31 to M35, a plurality of layers are arranged in quasi-isotropic lamination. The middle member 3 according to the present embodiment includes a plurality of hat-shaped members and Z-shaped members having a plurality of layers in quasi-isotropic lamination. Thus, it is possible to achieve high strength against compression from outside the panel member 100. Particularly, in a wing of an aircraft, preferable performance is required, not only in one direction but in a plurality of directions, against compressive stress, bending stress, shear stress, and tensile stress. The middle member 3 of the present embodiment is suitable in that the middle member 3 provides preferable performance in these aspects. While the content of the carbon fibers 13 in the middle member 3 is 60 mass%, it can be appropriately changed to between 40 mass% and 70 mass%, with 55 mass% to 70 mass% being particularly preferred. Also for the middle member 3, similar to the first skin member 1 and the second skin member 2, combinations of angles other than that described above are also acceptable for the orientation of the carbon fibers 13 in a plurality of layers. Even when using the combination of angles described above, the order of layering may differ from that described above.

As described above, the first skin member 1, the second skin member 2, and the middle member 3 each include a plurality of layers, wherein the number of layers varies between different portions. The first skin member 1, the second skin member 2, and the middle member 3 can be formed by making the laminate of carbon fibers 11, 12, 13 in the desired number for each portion and impregnating the space formed between the carbon fibers 11, 12, 13 with thermoplastic resin.

In order to make the first skin member 1 and the second skin member 2, base materials having a different number of layers of the carbon fibers 11, 12 for each portion are made, and these base materials are impregnated with thermoplastic resin, thereby forming sheet materials. Then, the sheet materials are shaped as necessary. In order to make the middle forming members M1, M2, M3 of the middle member 3, base materials having a different number of layers of the carbon fibers 13 for each portion are made, and these base materials are impregnated with thermoplastic resin, thereby forming sheet materials. Then, these sheet materials are shaped by a press machine into the shape described above.

The impregnated thermoplastic resin facilitates the connection between the skin member 1 and the middle member 3, and the connection between the skin member 2 and the middle member 3. A die suitable for the desired shape of the panel member 100 is arranged on the upper side of the first skin member 1 and the lower side of the second skin member 2, and a pressing process is performed using this die. During this pressing process, a heating process and a cooling process are performed for the die. Note that for the middle member 3, the connection process described above is performed while contact members (cores) suitable for the shapes of the areas S1 to S6 are arranged in the areas S1 to S6 (see Fig. 1 (b)). Particularly, in the present embodiment, the middle forming members M1, M2, M3 have different shapes. Moreover, the middle forming members M1, M2, M3 each vary, between different portions, in shape, number of layers, and thickness. Therefore, a plurality of contact members suitable for the different portions are arranged. Moreover, the operation of removing the contact members is performed individually for each contact member.

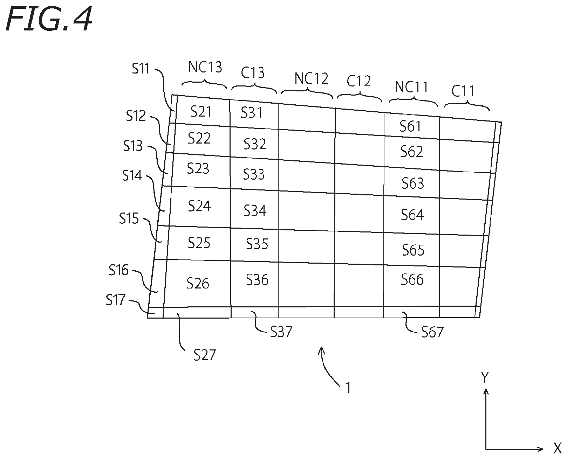

As shown in the plan view of Fig. 4, the first skin member 1 includes a plurality of divided portions, such as portions S11, S12, S13, ..., S31, S32, S33, ..., S61, S62, S63, ..., with a desired number of layers for each portion. The first skin member 1 includes at least two or more portions with different numbers of layers in the direction of arrangement (X direction) of the connected portions C11, C12, C13 and the non-connected portions NC11, NC12, NC13. The first skin member 1 includes at least two or more portions with different numbers of layers in the direction of extension (Y direction) of the connected portions C11, C12, C13 and the non-connected portions NC11, NC12, NC13. The number of layers in a predetermined portion of the first skin member 1 is greater than the number of layers in other predetermined portions. Note that although not shown in the figures, also the second skin member 2 and the middle member 3 include at least two or more portions with different numbers of layers in the direction of arrangement and/or the direction of extension. Note however that the number and size of the divided portions in the second skin member 2 and the middle member 3 are different from those in the first skin member 1.

The carbon fibers 11, 12, 13 are continuous fibers (long fibers) extending in one direction. For example, when continuous fibers are included in a panel member having a constant surface curvature or a panel member where the end portions have an equal length, the crossing angle between carbon fibers is constant and does not vary between different portions. On the other hand, the panel member 100 according to the present embodiment has anisotropy, and the lengths L1, L2 of the end portions are different from each other (see Fig. 1(a)). Therefore, the crossing angle between carbon fibers is not even and varies between different portions. Note however that the middle member 3 includes a plurality of middle forming members M1, M2, M3. Since the attitude and position of the middle forming members M1, M2, M3 can be set flexibly, it is possible to suppress the influence from the difference in crossing angle. Specifically, the variation in crossing angle can be made generally uniform across different portions. It is possible to suppress the difference in crossing angle caused by factors such as the difference in surface curvature. Alternatively, the middle forming members M1, M2, M3 can be set to different states from each other so that the variation in crossing angle is of a predetermined magnitude according to the desired shape and strength of the panel member 100. That is, the middle forming members M1, M2, M3 can be arranged according to the desired strength and the required panel shape. The attitude and position of each middle forming member M1, M2, M3 can be adjusted appropriately.

Since the middle forming members M1, M2, M3 are arranged individually, it is possible to individually set the shape, size, and number of layers thereof. The number of layers of the middle forming members M1, M2, M3 can easily be varied appropriately in the direction of extension. As shown in Fig. 4, by setting the number of layers for different portions of the first skin member 1, the second skin member 2, and the middle member 3 to their respective suitable numbers of layers, the panel member 100 including the composite curvature surface member can be formed into a desired shape, thereby satisfying the desired strength. Moreover, their variations can be diversified (made more versatile). Note that the desired strength is set according to the compatibility with the curvature of the composite curvature surface member and the compatibility based on the connecting structure to the main wing portion.

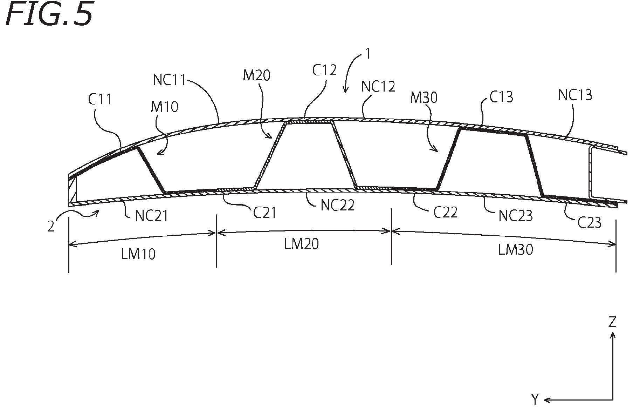

Fig. 5 shows another example of the middle forming member. As shown in Fig. 5, the middle member 3 may include middle forming members M10, M20, M30 that are butted together. The middle forming member M10 and the middle forming member M20 are in contact with each other, and the middle forming member M20 and middle forming member 30 are in contact with each other. Although not shown in the figures, the middle member 3 may include middle forming members that are butted together and middle forming members that are separated from each other (see Fig. 1(a)). By ingeniously combining a plurality of middle forming members, it is possible to realize a suitable panel member 100 that satisfies various application and shape requirements.

The panel member 100 according to the present embodiment has high durability against out-of-plane compression. When a pressure load is applied from above to the first skin member 1, the panel member 100 is compressed in the thickness direction (Z direction). In this case, since the carbon fibers 11, which are continuous fibers, are oriented as described above, it is possible to achieve high durability. The first skin member 1 receives compressive loads from various directions. The middle member 3, having a quasi-isotropic laminate configuration, supports the first skin member 1, thereby achieving a pronounced effect of improving durability. Various concentrated stresses corresponding to pressure loads from various directions can potentially occur at corner portions of the middle member 3 (e.g., portions R1, R2, which are the transition from being connected to the first skin member 1 to being not connected to the first skin member 1, as shown in Fig. 1(b)). However, the quasi-isotropic laminate configuration described above desirably functions against these concentrated stresses. As a result, the shape of the first skin member 1 is stably maintained over a long period of time. The overall shape of the panel member 100 is also desirably maintained. Therefore, strength against out-of-plane compression, as described above, is improved. The laminated layers include 45-degree-oriented carbon fibers 11, 12, 13. Therefore, strength against shear forces within the panel plane is improved. Note that the panel member 100 achieves similar effects also when the panel member 100 receives pressure loads applied from below to the second skin member 2. The direction of arrangement of the panel member 100 can be changed appropriately. The panel member 100 can be effectively applied to specifications and applications where pressure loads are applied to the first skin member 1 and/or to specifications and applications where pressure loads are applied to the second skin member 2. That is, the panel member 100 according to the present embodiment is a versatile panel member.

Regarding such out-of-plane compression, the shapes of the middle forming members M1, M2, M3 also contribute to improved strength. For example, each middle forming member M1, M2, M3 at least includes a portion (the upper surface portion) that is connected to the first skin member 1, a portion (the lower surface portion) that is connected to the second skin member 2, and a portion (the inclined surface portion) that links together these portions. These three portions are integrally formed. Therefore, the middle forming members M1, M2, M3 can easily change shape corresponding to the pressure load. The middle forming members M1, M2, M3 can achieve high durability when receiving the pressure loads described above. Particularly, these three portions include continuous carbon fibers 13, thereby improving their durability.

The panel member 100 includes the corrugated middle member 3, which has high compressive strength during flight and little aging. With the panel member 100, the thicknesses of the first skin member 1, the second skin member 2, and the middle member 3 can be flexibly set appropriately according to the combination of the members 1, 2, 3. The panel member 100 as a whole can achieve the optimal combination of the members 1, 2, 3. When used as an aileron connected to the main wing, the panel member 100 can appropriately meet a predetermined strength for the connecting member. In the present embodiment, each of the first skin member 1, the second skin member 2, and the middle member 3 has a quasi-isotropic laminate configuration described above, and it is possible to achieve synergistic effects based on their respective characteristics. It is desirable because the synergistic effects are further enhanced as the panel member 100 includes the composite curvature surface member. Note however that depending on various design conditions, only one of the first skin member 1, the second skin member 2, and the middle member 3 may have a quasi-isotropic laminate configuration. These features and effects represent a significant difference compared to a panel member with a uniform thickness or a panel member using a single-curvature surface member. With the panel member 100, the design flexibility is increased and the versatility is improved.

Since the middle member 3 is welded to the first skin member 1 and the second skin member 2, the panel member 100 can ensure the smoothness of the outer surface. Moreover, due to its high durability against the out-of-plane compression described above, the smoothness can be maintained over a long period of time. Furthermore, the provision of the cover member 6 described above improves the peel strength of the panel member 100 assembled by welding.

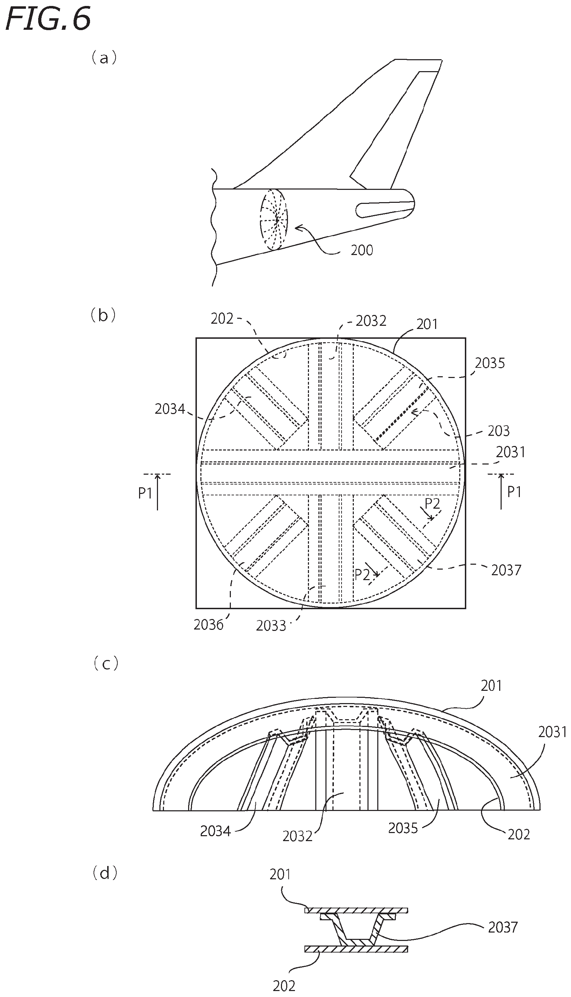

There is no limitation to the configurations or shapes described above, and similar effects can be achieved also with other configurations and shapes. For example, while the middle forming members M1, M2, M3 all have different shapes in the embodiment described above, they may all have the same shape if the desired shape, strength, or durability, etc., for panel member 100 can be achieved. Alternatively, only some of the plurality of middle forming members may have the same shape. Another embodiment will be described using Fig. 6. The following description focuses primarily on the points that are different from the embodiment described above.

Fig. 6(a) is a schematic diagram showing a panel member 200 according to the second embodiment. The panel member 200 is used in a pressure bulkhead provided on the rear side of an aircraft. The panel member 200 has a dome-shaped surface including thermoplastic resin.

Fig. 6(b) is a rear view of the panel member 200. The panel member 200 includes a first skin member 201 forming the outer surface, a second skin member 202 forming the inner surface, and a middle member 203 interposed therebetween and including continuous fibers. The first skin member 201 and the second skin member 202 have curved primary surfaces with a plurality of curvatures. A plurality of middle members 203 are provided along the primary surface.

In the present embodiment, the middle member 203 includes seven radially arranged middle forming members 2031, 2032, 2033, 2034, 2035, 2036, 2037 (see Fig. 6(b)). The first middle forming member 2031 is the longest member. The second middle forming member 2032 and the third middle forming member 2033 are provided so as to intersect with the first middle forming member 2031. The fourth middle forming member 2034 to the seventh middle forming member 2037 are provided between the first middle forming member 2031 and the second middle forming member 2032 and between the first middle forming member 2031 and the third middle forming member 2033. As can be seen from Fig. 6(c) and Fig. 6(d), the middle forming members 2031 to 2037 each have a hat-shaped cross-sectional shape.

The panel member disclosed in the present specification is suitable for composite curvature surface members. The panel member 200 is used in a pressure bulkhead and helps maintain stable air pressure inside the aircraft. Particularly, a panel member 200 has high durability against out-of-plane pressure and can therefore suppress aging, and is preferable as a member that can maintain stable performance over a long period.

The panel members 100, 200 according to the first and second embodiments have been described above. There is no particular limitation on the type of thermoplastic resin included in the first skin member 1, 201 and the second skin member 2, 202, and polyphenylene sulfide, ketone-based resins, or other resins may be used. A material having a high melting point is mainly used as thermoplastic resin. A material having a high melting point is excellent in forming high-strength resin. Note however that the thermoplastic resin is not limited to these materials, and other materials may be used. The same type of thermoplastic resin may be used also for the middle member 3, 203.

For example, the carbon fibers may be PAN-based carbon fibers and PITCH-based carbon fibers. Note however that there is no limitation to the carbon fibers described above, and continuous fibers such as glass fibers (e.g., E-glass fibers) are also applicable. The longitudinal direction of these continuous fibers may align with the X direction or the Y direction. Note that being in alignment with the X direction or the Y direction not only includes being strictly in alignment with the X direction or the Y direction, but also includes being slightly inclined from the X direction or the Y direction. Similar effects can be achieved even when being slightly inclined.

Regarding the thermoplastic resin and the continuous fibers in the first skin member 1, 201, the second skin member 2, 202, and the middle member 3, 203, different materials may be used in some of the members or in all of the members. Note that in the embodiment described above, the first skin member 1, 201 and the middle member 3, 203 are welded together. The second skin member 2, 202 and the middle member 3, 203 are welded together. Therefore, forming these members from the same type of material is a significant feature. The embodiment described above achieves the effect of high recyclability and reduced manufacturing lead time, and the more the material of the same type (identical material) is used, the more pronounced the effect is.

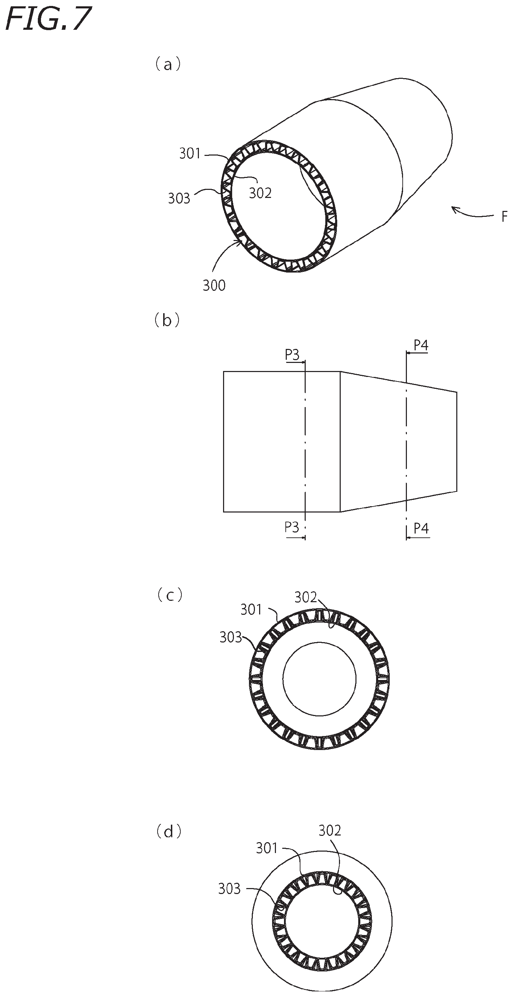

The panel member disclosed herein is not limited to the panel members 100, 200 of the embodiment described above, which are used as components of ailerons or pressure bulkheads, and may also be applied to other aircraft components, e.g., the outer skin of the fuselage F shown in Fig. 7. The outer skin of the fuselage F is composed of annular panel members 300. The annular panel member 300 has high strength (rigidity) against out-of-plane compression. By having an outer skin member 301, an inner skin member 302, and a corrugated middle member 303 as shown in the figures, the panel member 300 achieves the effect of reducing weight or manufacturing cost by reducing the members as compared to conventional fuselages. Since the panel member 300 has two types of skin members, i.e., an outer skin member (the first skin member) 301 and an inner skin member (the second skin member) 302, it is possible to achieve the pressurization fail-safe function. The middle member 303, similar to other embodiments, includes a plurality of middle forming members. Thus, it is possible to realize a fuselage F with annularly uniform strength. By appropriately setting the shape and the number of layers of the middle forming members (note that the thickness changes as the numbers of layers changes), the number of layers of the outer skin member 301 and the inner skin member 302, etc., it is possible to realize a configuration in which a desired portion have a different strength from other portions. Therefore, the strength, etc., can be flexibly set according to the specifications required for the fuselage F. This achieves improved durability and weight reduction for the fuselage F, thereby improving the versatility. Furthermore, it can be applied to other aircraft components, such as the upper surface skin of the main wing. The panel member disclosed herein has high compressive strength during flight, thereby achieving the effect of reducing weight and manufacturing cost. The panel members disclosed herein not only can achieve significant effects in the field of aircrafts, but also can similarly achieve significant effects in other fields, such as vehicles, railways, or underwater mobility vehicles, as well as structures such as offshore wind power generation facilities, and disaster prevention infrastructure such as shelters, particularly in fields requiring applications as composite curvature surface members.

### Reference Signs List

1 First skin member
2 Second skin member
3 Middle member
4 Rear edge member
5 Spar member
6 Cover member
C11, C12, C13 Connected portion (first connected portion)
NC11, NC12, NC13 Non-connected portion (first non-connected portion)
C21, C22, C23 Connected portion (second connected portion)
NC21, NC22, NC23 Non-connected portion (second non-connected portion)
M1, M2, M3 Middle forming member
11, 12, 13 Carbon fibers
100 Panel member

## Claims

1. A panel member comprising:
a sheet-like first skin member and a sheet-like second skin member including thermoplastic resin; and
a middle member including continuous fibers and arranged between the first skin member and the second skin member, wherein:
the first skin member includes a plurality of first connected portions that are connected to the middle member, and a plurality of first non-connected portions that are not connected to the middle member;
the second skin member includes a plurality of second connected portions that are connected to the middle member, and a plurality of second non-connected portions that are not connected to the middle member;
the first connected portions and the first non-connected portions are arranged alternating in a first direction;
the second connected portions and the second non-connected portions are arranged alternating in the first direction;
the middle member includes a plurality of middle forming members; and
the plurality of middle forming members each include a first portion that is connected to at least some of the first connected portions of the first skin member, a second portion that is connected to at least some of the second connected portions of the second skin member, and a third portion that connects together the first portion and the second portion and that is not connected to the first connected portions and the second connected portions.

2. The panel member according to claim 1, wherein:
at least one of the plurality of middle forming members includes a first middle forming portion formed by laminating a first number of layers of the continuous fibers, and a second middle forming portion formed by laminating a second number of layers of the continuous fibers; and
the first number is greater than the second number.

3. The panel member according to claim 2, wherein:
the first connected portions, the first non-connected portions, the second connected portions, and the second non-connected portions extend in a second direction different from the first direction; and
the first middle forming portion and the second middle forming portion are arranged in the first direction or in the second direction.

4. The panel member according to any one of claims 1 to 3, wherein:
the first skin member and/or the second skin member include a first skin forming portion formed by laminating a third number of layers of the continuous fibers, and a second skin forming portion formed by laminating a fourth number of layers of the continuous fibers; and
the third number is greater than the fourth number.

5. The panel member according to claim 4, wherein:
the first connected portion, the first non-connected portion, the second connected portion, and the second non-connected portion extend in a second direction different from the first direction; and
the first skin forming portion and the second skin forming portion are arranged in the first direction or in the second direction.

6. The panel member according to any one of claims 1 to 5, wherein:
the first connected portion, the first non-connected portion, the second connected portion, and the second non-connected portion extend in a second direction different from the first direction;
a cover member is attached to an end portion, in the second direction or in a direction opposite to the second direction, of the first skin member, the second skin member, and the middle member, wherein the cover member covers an area defined by the first skin member, the second skin member, and the middle member; and
the cover member includes a plurality of fixed surface portions that are fixed to at least two of the first skin member, the second skin member, and the middle member.

7. The panel member according to any one of claims 1 to 6, wherein at least one of the plurality of middle forming members has a hat-shaped cross-sectional shape.

8. The panel member according to any one of claims 1 to 7, wherein at least one of the first skin member and the second skin member is a composite curvature surface member.
